# EUROPÄISCHE PATENTSCHRIFT

(11) **EP 0 979 314 B1**
(45) Veröffentlichungstag und Bekanntmachung des Hinweises auf die Patenterteilung: **05.12.2001**
(21) Anmeldenummer: 98919422.0
(22) Anmeldetag: 28.04.1998
(51) Int. Cl.: C22B 7/00, C22B 34/32, F23G 7/00, F23G 5/14, F23G 5/027, B01D 53/64, B01D 53/75, F27D 17/00, B01D 53/46

(54) **VERFAHREN UND VORRICHTUNG ZUR RÜCKGEWINNUNG VON ROHSTOFFEN AUS ABFÄLLEN UND RESTSTOFFEN**
PROCESS AND DEVICE FOR RECOVERING RAW MATERIALS FROM WASTE AND RESIDUES
PROCEDE ET DISPOSITIF PERMETTANT DE RECUPERER DES MATIERES PREMIERES DANS DES DECHETS ET DES RESIDUS

(30) Priorität: 28.04.1997 DE 19717688
(43) Veröffentlichungstag der Anmeldung: 16.02.2000
(73) Patentinhaber: Kaszas Tiberiu, 4594 Steinbach (AT); Kaszas-Savos, Melania, 4594 Steinbach (AT)
(72) Erfinder: Kaszas-Savos, Melania, Dr. Dipl.-Ing., 4594 Steinbach (AT); Kaszas, Tiberiu, 4594 Steinbach (AT)
(74) Vertreter: Hudler, Frank, Dipl.-Ing.
(86) Internationale Anmeldenummer: IB9800807
(87) Internationale Veröffentlichungsnummer: WO9849355

(56) Entgegenhaltungen:
- WO-A-91/05881
- WO-A-95/23317
- DE-A- 2 935 564
- DE-A- 3 514 471
- DE-C- 3 127 499
- DE-C- 4 333 510
- DE-U- 9 414 534
- GB-A- 1 119 134
- GB-A- 2 006 177
- US-A- 3 968 756
- PATENT ABSTRACTS OF JAPAN vol. 003, no. 080 (M-065), 11. Juli 1979 & JP 54 058973 A (MITSUI ENG & SHIPBUILD CO LTD), 12. Mai 1979
- DATABASE WPI Section Ch, Week 7739 Derwent Publications Ltd., London, GB; Class J09, AN 77-69563Y XP002075884 & JP 52 097 369 A (BABCOCK-HITACHI KK)

## Beschreibung

Die Erfindung betrifft ein Verfahren zur Rückgewinnung von Rohstoffen aus Abfällen und Reststoffen, insbesondere zur Rückgewinnung von Schwermetallen, indem zunächst eine flüssige oder pastöse Eingangsmischung und/oder eine Eingangsmischung aus zerkleinerten oder gemahlenen Bestandteilen hergestellt wird, wobei die Rückgewinnung der Rohstoffe aus der Eingangsmischung durch eine chemisch-thermische Behandlung erfolgt und die Abgase aus dem Ofen durch eine mehrstufige Filteranlage geleitet werden, wobei der jeweils erste Filter als heißer Filter ausgebildet ist und die Abgase anschließend gekühlt und nach Durchströmen wenigstens eines zweiten Filters nach einer Vorwärmung bei hoher Temperatur verbrannt werden. Die Erfindung betrifft weiterhin eine Vorrichtung zur Durchführung des Verfahrens.

Bei der Duchführung von Produktionsprozessen, insbesondere bei der Herstellung der verschiedensten Produkte, entstehen Abfälle oder produktionsbedingte Reststoffe meistens in Form von Stoffmischungen, die Schwermetalle wie Chrom, Zink, Nickel, Kupfer, Blei u.a., oft auch in Verbindung mit organischen Substanzen, enthalten, wobei in der Regel der Anteil von Chrom überwiegt.

Die Trennung dieser Stoffmischungen zur Rückgewinnung von wertvollen Rohstoffen ist wünschenswert, aber wegen der Unterschiedlichkeit der chemischen Eigenschaften dieser Stoffmischungen sehr schwierig. Beispielsweise kann in den flüssigen, pastösen oder festen zerkleinerten oder gemahlenen Abfällen oder Reststoffen Chrom-VI-Oxid oder Chrom-III-Oxid (Cr₂O₃) oder auch Zink enthalten sein.

Da die Rückgewinnung der Schwermetalle sehr aufwendig und verhältnismäßig unwirtschaftlich ist, werden schwermetallhaltige Abfälle beispielsweise in einer chemisch-physikalischen Anlage so behandelt, daß die Schadstoffe reduziert, d.h. inertisiert, also schwer eluierbar gemacht werden. Der dabei entstehende Filterkuchen kann dann in einer Sonderabfall-Deponie endgelagert werden.

Beispielsweise wird bei einem von der Bayer AG bekanntgewordenen Verfahren zur Rückgewinnung von Chrom in einem hochkonzentrierten Bereich gearbeitet, wobei nur bestimmte, bei eigenen Verfahren entstehende Lösungen mit bestimmten Kontaminationen verwendet werden, die als Zuschlagstoffe zur Aufbereitung von Chromerzen verwendet worden sind. Hierbei werden die Schwermetalle von der flüssigen in die feste Phase gebunden. D.h. es erfolgt zunächst eine chemische Behandlung bei der die hochkonzentrierten chromhaltigen Abfälle ausgefällt werden, wobei sich Schlämme bilden. Nach der Trocknung dieser Schlämme können die Abfälle dann in einer Metallhütte weiterverarbeitet werden.

Aus der DE-A-3514471 ist ein Verfahren und eine Vorrichtung zur Abtrennung von Arsen aus bei der metallurgischen Verarbeitung von arsenhaltigen Materialien in Schmelzprozessen anfallendem heißem Abgas. Bei diesem Verfahren werden die Abgase, die arsenhaltige Verunreinigungen bzw. Kondensate und wertmetallhaltige Stäube enthalten, in einer mehrstufigen Filteranlage gereinigt. Um zu erreichen, daß arsenfreie Wertmetallstäube abgeschieden werden, wird das Abgas unmittelbar nach dem Schmelzprozeß abgekühlt und unter Zugabe eines Reduktionsmittels behandelt, so daß nichtstabile arsenhaltige Verbindungen entstehen. Dadurch wird das Arsen in der Gasphase stabil gehalten und kann sich nicht an die im Heißgasfilter abgeschiedenen wert-metallhaltigen Stäube anlagern.

Die Abscheidung der Arsenkondensate erfolgt dann in einem zweiten nachgeordneten kalten Filter.

Mit einem solchen Verfahren ist es jedoch nicht möglich, Schwermetalle aus Abfällen und Reststoffen zurückgewinnen.

Die WO-A-91/05881 beschreibt ferner ein Verfahren zur Rückgewinnung von Chrom aus Abfällen durch Bildung wasserlöslicher Chromate, Zu diesem Zweck wird getrocknetes chromhaltiges Material zerkleinert und unter Hinzufügung alkalischer Reaktanden und von Oxidationsmitteln in einer geschlossenen Kammer unter Sauerstoffzufuhr wärmebehandelt. Die sich bildenden wasserlöslichen Chromate werden anschließend ausgespült. Dieses Verfahren ist jedoch zur Herstellung edelmetallhaltiger Stäube oder Schuppen nicht geeignet.

Schließlich wird noch in der US-A-3,968,756 ein Verfahren zur Verbrennung von Chrom enthaltenden Schlamm beschrieben.

Ansonsten werden Hochkonzentrierte Abfälle entsprechend den gültigen strengen Umweltvorschriften in Behältnissen o.dgl. verpackt und bevorzugt in Untertage-Deponien endgelagert.

Bei leicht kontaminierten Abfällen, die einen gewissen Mindestheizwert aufweisen, besteht die Möglichkeit, diese in einer Abfallverbrennungsanlage zu verbrennen. Die bei der Verbrennung entstehenden Rückstände, wie Flugasche und Schlacke, müssen dann allerdings wegen des erhöhten Schwermetallgehaltes in Sondermüll-Deponien gelagert werden. Zusätzlich muß der Abfallverbrennungsanlage noch eine Nachverbrennungsanlage nachgeschaltet sein, um die bei der ersten Verbrennung von organischen Substanzen entstehenden Schadstoffe wie z.B. Dioxin aus der Abluft zu entfernen. Zu diesem Zweck muß in der Nachverbrennungsanlage eine wesentlich höhere Temperatur erreicht werden, als in der eigentlichen Abfallverbrennungsanlage. Der Nachteil hierbei ist, daß durch die hohe Temperatur das bei der ersten thermischen Behandlung erzeugte Chrom-III-Oxid wieder in leicht lösliches Chrom-VI-Oxid umgewandelt wird und dann sogar die Anlage unkontrolliert verlassen kann. Ein ähnlicher Effekt tritt auch bei Zink ein.

In Ausnahmefällen können geringe Mengen der Reststoffe mit begrenzter Zusammensetzung nach einer entsprechenden Vorbehandlung in Metallhütten als Zuschlagstoffe verwendet werden.

Diese Beispiele zeigen, daß die wertvollen Schwermetalle nur zu einem äußerst geringen Anteil wiederverwendet werden. Die Endlagerung des größeren Teiles der Schwermetalle aus Reststoffen und Abfällen in Sondermüll-Deponien ist die wirtschaftlich und aus Gründen des Umweltschutzes ungünstigste Variante.

Der Erfindung liegt daher die Aufgabe zugrunde, ein Verfahren zur Rückgewinnung und Trennung von Rohstoffen aus Abfällen und Reststoffen zu schaffen, das mit einfachen Mitteln realisierbar ist, mit hoher Zuverlässigkeit arbeitet und bei dem möglichst keine weiteren Abfälle oder Reststoffe entstehen und mit dem auch bereits deponierte Reststoffe und Abfälle aufbereitet werden können.

Erfindungsgemäß erfolgt die Trennung der Rohstoffe bei einem Verfahren der eingangs genannten Art durch eine chemisch-thermische Behandlung in einem von Luft durchströmten Ofen, indem die flüssige, pastöse und/oder feste Eingangsmischung in Abhängigkeit von deren Zusammensetzung zunächst mit Zuschlagstoffen vermischt und gemeinsam mit einem Oxidations- oder Reduktionsmittel in den Ofen eingeblasen wird. Anschließend wird die Eingangsmischung der chemisch/thermischen Behandlung in dem Ofen dadurch unterzogen, daß die flüssige, pastöse und/oder feste Eingangsmischung in Abhängigkeit von deren Zusammensetzung zunächst mit Zuschlagstoffen vermischt wird, daß die Eingangsmischung gemeinsam mit einem Oxidations- oder Reduktionsmittel in den Ofen eingeblasen wird, daß die Eingangsmischung bei einer vorgegebenen Temperatur von der Ofenatmosphäre mit einer vorgegebenen Strömungsgeschwindigkeit durchströmt wird, wodurch sich in Abhängigkeit von der Luftzusammensetzung und Temperatur schwermetallhaltige Schuppen niedriger Dichte bilden, die durch die im Ofen eingestellte Strömungsgeschwindigkeit der Luft durch die Filteranlage geleitet werden.

Als Zuschlagstoffe kommen aluminium-, eisen-, chlor- oder schwefelhaltige Stoffe, sowie gemahlene Kunststoffe oder Kunststoffgranulat als Reduzierungsmittel in Betracht. Für den Einsatz in chromhaltigen Schamottesteinen kommt als Zuschlagstoff Aluminiumoxid in Keramikgemenge oder Eisenoxid bei speziellen Legierungen in Betracht.

Der Sauerstoffgehalt, die Geschwindigkeit der chemischen Reaktion und die Dichte der sich bildenden Schuppen sind die zu berücksichtigenden Prozeßparameter und bestimmen die im Einzelfall nötige Strömungsgeschwindigkeit im Ofen. Außerdem ist die Strömungsgeschwindigkeit vom rückzugewinnenden Schwermetall und auch davon abhängig, ob ein Drehrohrofen oder ein Wirbelschichtofen zum Einsatz kommt.

Die thermische Behandlung erfolgt in einer reduzierenden/oxidierenden Atmosphäre bei einer Temperatur zwischen 350 °C und über 700 °C in Abhängigkeit von der jeweiligen Eingangsmischung. Die im Einzelfall notwendigen Ofentemperaturen sind davon abhängig, welche Schwermetalle rückgewonnen werden sollen und welche Zusammensetzung die Eingangsmischung aufweist und welche Endprodukte (Mineralisierungstemperatur) entstehen sollen. So ist bei Chrom als Chrom-III-Oxid oder oxidischen Mischungen eine Ofentemperatur von 500 - 900 °C erforderlich. Bei Zinkoxid liegt die günstigste Temperatur bei 550 - 1250 °C. Darüber hinaus ist für die Rückgewinnung von Chrom-III-Oxid aus chromhaltigen Reststoffen eine reduzierende Atmosphäre und für die Rückgewinnung von Zinkoxid aus zinkhaltigen Reststoffen eine oxidierende Atmosphäre erforderlich.

Die Temperatur im ersten Filter beträgt ca. 800 °C Das den ersten Filter passierende Abgas kann dann vor Erreichen des nächsten Filters auf ca. 200 °C gekühlt werden.

Das entstehende Rauchgas, welches CO₂, SO₂, CL₂ usw. enthalten kann, wird nach der Filterung in einer üblichen Rauchgasreinigungsanlage zur Rückgewinnung von Salzsäure und Schwefelsäure weiterbehandelt.

In chlorfreien Systemen erfolgt die Bildung von Chrom-III-Oxid über die Zersetzung der chromhaltigen Stoffe und die Reduktion/Oxidation des Chromes.

Bei chlorhaltigen Systemen erfolgt die Bildung von Chrom-III-Oxid über die Zersetzung der chrom- und clorhaltigen Stoffe, die Bildung von Chromylchlorid (CrO₂CL₂), die Zersetzung von Chromylchlorid und die Bildung von Chrom-III-Oxid.

Die Rückgewinnung von Chrom als Chrom-III-Oxid aus Abfällen mit einer komplizierten Zusammensetzung erfolgt durch Extraktion mit Chlor, indem als Zwischenstoff Chromylchlorid gebildet wird.

Das Verfahren kann für die Rückgewinnung beliebiger Schwermetalle wie Chrom, Zink, Kupfer, Blei, Nickel u.a. eingesetzt werden, wobei lediglich die Verfahrensparameter entsprechend anzupassen sind.

Das erfindungsgemäße Verfahren kann am besten mit einem thermischen Reaktor zur chemisch/thermischen Behandlung der Rohstoffe realisiert werden, dem eine mehrstufige Filteranlage unmittelbar nachgeschaltet ist, wobei eine Nachbrennkammer in Strömungsrichtung der Abgase gesehen hinter der Filteranlage angeschlossen ist, bzw. nach der der Staubabscheidung angeordnet ist und sich dadurch auszeichnet, daß der thermische Reaktor ein Drehrohr- oder Wirbelschichtofen ist, dessen Ofentemperatur in Abhängigkeit von der Mineralisierungstemperatur der herzustellenden Endprodukte zwischen 350°C und 1.250°C liegt, daß die Temperatur des ersten Filters der mehrstufigen Filteranlage ca. 800°C beträgt und daß der zweite Filter bei einer Temperatur von ca. 200°C gefahren wird.

Um unerwünschte chemische Reaktionen in der Filteranlage zu vermeiden, wird die Abscheidung von Staub, bzw. den Schuppen, im ersten Filter bei der Temperatur von 800 °C durchgeführt und das Rauchgas oder Abgas vor Erreichen eines weiteren Filters gekühlt, um eine Rückbildung von Chrom-VI-Oxid zu verhindern. Als Filteranlage kommen alle bekannten Filter, wie z.B. ein Zyklon oder Keramikfilter für hohe Temperatur (als erster Filter ) oder Textilfilter für niedrige Temperaturen (als zweiter Filter) in Betracht, wobei das Abgas vor Erreichen des Textilfilters auf ca. 200 °C abgekühlt wird.

Für die Verbrennung oder Zersetzung von organischen Verbindungen müssen in der Nachbrennkammer sehr hohe Temperaturen erreicht werden, so daß die Nachbrennkammer nur unschädliche Substanzen, wie z.B. CO₂, NO₂ oder SO₂, verlassen. Aus diesem Grund ist es zweckmäßig, zwischen der Filtereinrichtung und der Nachbrennkammer eine Heizeinrichtung anzuordnen, damit während der kurzen Verweilzeit der Abgase in der Nachbrennkammer die nötige hohe Temperatur erreicht wird.

Der Vorteil des erfindungsgemäßen Verfahrens zur Rückgewinnung von Rohstoffen aus Abfällen und Reststoffen ist darin zu sehen, daß die chemisch-thermische Behandlung einfach an die unterschiedliche Zusammensetzung der Eingangsstoffe angepaßt werden kann, indem einfach die Prozeßparameter und/oder die Zusammensetzung der Zuschlagstoffe verändert wird. Außerdem fallen außer den produktionsbedingten Abfällen keine weiteren Rückstände an. Nach der chemisch-thermischen Behandlung sind nur noch Mahl- und Siebprozesse notwendig, um die rückgewonnenen Rohstoffe in Form von Schuppen mit unterschiedlicher Korngröße und Dichte auf deren Wiederverwendung vorzubereiten, d.h. die rückgewonnenen Schwermetalle werden den Abnehmern in Pulverform zur Verfügung gestellt.

Darüber hinaus ist das erfindungsgemäße Verfahren sehr umweltfreundlich, da keinerlei die Umwelt schädigenden Stoffe zum Ende des Verfahrens entstehen oder freigesetzt werden. Bei Fehlchargen kann ein erneuter Prozeßdurchlauf vorgesehen werden, was z.B. in dem Fall notwendig wird, wenn im Endprodukt, also in den Schuppen, ein zu hoher Chrom-VI-Gehalt festgestellt wird. In diesem Fall kann ein nochmaliger Prozeßdurchlauf erfolgen, bei dem durch Hinzufügen eines Reduktionsmittels die Produktqualität gesichert wird.

Gemäß Patentanspruch 10 umfaßt die Vorrichtung zur Durchführung des erfindungsgemäßen Verfahrens ein thermischer Reaktor zur chemisch-thermischen Behandlung der Rohstoffe. Dem Reaktor ist eine Filteranlage unmittelbar nachgeschaltet, wobei eine Nachbrennkammer in Strömungsrichtung der Abgase gesehen, hinter der Filteranlage angeschlossen ist, bzw. nach der Staubabscheidung angeordnet ist.

Der thermische Reaktor ist als ein Drehrohr- oder Wirbelschichtofen ausgebildet, so daß eine ausreichende Verweilzeit der mit den Zuschlagstoffen vermischten Abfälle und Reststoffe im thermischen Reaktor gesichert wird.

Die Filteranlage ist weiterhin mehrstufig ausgebildet, wobei dem ersten Filter eine Kühleinrichtung nachgeschaltet ist. Zur Vermeidung unerwünschter chemischer Reaktionen beträgt die Temperatur des ersten Filters ca. 800 °C, d.h. der erste Filter ist als heißer Filter ausgebildet.

Der dem ersten Filter nachgeschaltete zweite Filter ist als Textilfilter ausgebildet und wird bei einer Temperatur von ca. 200 °C gefahren.

Da die den zweiten Filter verlassenden Abgase eine sehr niedrige Temperatur aufweisen, ist es von Vorteil, wenn zwischen der Filteranlage und der Nachbrennkammer eine Heizeinrichtung zur Vorwärmung der Abgase angeordnet wird. Dadurch wird gewährleistet, daß die Abgase in der Nachbrennkamer die erforderliche hohe Temperatur erreichen.

Die Erfindung soll nachfolgend an einem Ausführungsbeispiel näher erläutert werden.

Als Ausgangsstoff wird beispielsweise von einer Chrom-VI-Oxid haltigen Lösung mit folgender Zusammensetzung ausgegangen:

| | |
|---|---|
| CrO₃ | 100 - 250 g |
| Cr₃+ | 20 - 40 g |
| Fe | 10 - 30 g |
| Al | 1 - 20 g |
| F | 1 - 5 g |
| Si | 1 - 2 g |
| H₂SO₄ | 1 - 10 g |

Dieser Ausgangsstoff wird mit einer aluminiumhaltigen Lösung oder einem Aluminiumhydroxid-Schlamm gemischt, um das Fluor zu AlF₃ zu binden und gleichzeitig die Rezeptur des Ausgangsstoffes zu korrigieren. Zusätzlich werden Quarzsand oder siliziumhaltige Abfälle zugemischt.

Die somit hergestellte Eingangsmischung wird gemeinsam mit Kunststoffgranulat in einen Drehrohrofen eingeblasen und in diesem einer thermisch-chemischen Behandlung unterzogen. Dazu wird eine Ofentemperatur von 750 °C und 800 °C und eine reduzierende Ofenatmosphäre eingestellt. Das Kunststoffgranulat kann aus beliebigen Kunststoffen bestehen und dient als Reduzierungsmittel, um im Ofen die nötige reduzierende Atmosphäre zu erzeugen.

Im Drehrohrofen wird die eingeblasene Mischung von der Ofenatmosphäre durchströmt, wobei die sich bildenden Chrom-III-Schuppen von der Luftströmung in einen nachgeschalteten ersten Staubfilter getragen werden. In diesem Staubfilter werden die Schuppen von dem Abgas getrennt und anschließend gekühlt.

Der erste Staubfilter wird bei 800 °C gefahren Damit werden unerwünschte chemische Reaktionen, wie z.B. die Oxidation von Chrom-III-Oxid zu Chrom-VI-Oxid, verhindert. Eine Kühlung des Staubfilters ist bei der Rückgewinnung von Kupfer oder Nickel zweckmäßig, wohingegen bei der Rückgewinnung von Chrom, Zink oder Blei eine Filtertemperatur von ca. 800 °C sinnvoll ist.

Um eine vollständige Trennung der Abgase von den Schwebstoffen (Schuppen, Staub) zu sichern, ist dem ersten Staubfilter ein zweiter Staubfilter in Form eines Textilfilters nachgeschaltet. Zwischen beiden Filtern ist eine Kühlvorrichtung angeordnet, um die Abgase vor Erreichen des zweiten Filters auf ca. 200 °C herunterzukühlen.

Nachdem die Abluft den Staubfilter passiert hat, wird diese wieder erwärmt und in eine Nachbrennkammer geleitet, in der organische Bestandteile der Abluft, z.B. Dioxin, zu unschädlichen Substanzen, wie CO₂, NO₂, SO₂ verbrannt werden.

Nach der Brennkammer wird das in der Brennkammer entstandene Rauchgas, welches CO₂, SO₂, Cl₂ usw. enthalten kann, in eine Rauchgasreinigungsanlage geleitet, mit deren Hilfe dann Salzsäure und Schwefelsäure rückgewonnen werden kann.

Bei clorhaltigen Systemen erfolgt die Bildung von Chrom-III-Oxid über eine Zwischenstufe, indem zunächst Chromylchlorid durch die Zersetzung der chlor- und chromhaltigen Stoffe hergestellt wird, das anschließend zu Cl₂ und Cr₂O₃ zersetzt wird.

Das vorstehend beschriebene Verfahren ist zur Rückgewinnung beliebiger Schwermetalle, wie Chrom, Zink, Kupfer, Blei, Nickel u.a. geeignet, wobei lediglich die Verfahrensparameter zu ändern sind.

Bei dem erfindungsgemäßen Verfahren werden folgende Reststoffe eingesetzt:

### Hauptstoffe:

Das sind die Reststoffe, die Schwermetalle für die Rückgewinnung enthalten. Dies sind schwermetallhaltige Lösungen, Schlämme oder Pulver, wobei das Schwermetall chemisch gebunden oder in metallischer Form vorliegen kann.

### Zuschlagstoffe:

Das sind einerseits Produktionsstoffe, als Reststoffe, die bei der chemisch-thermischen Behandlung reduzierende Eigenschaften (Kunststoff in einer Chromanlage) oder oxidierende Eigenschaften (Peroxide in einer Zinkoxidanlage) aufweisen und andererseits Hilfsstoffe, die zur Korrektur der Rezeptur notwendig sind. Derartige Hilfsstoffe sind beispielsweise Aluminium-, Eisen-, Silizium- oder Magnesiumoxid.

Die Vorrichtung zur Durchführung des Verfahrens besteht aus einem thermischen Reaktor (Drehrohr- oder Wirbelschichtofen) zur chemisch-thermischen Behandlung der Rohstoffe, dem eine mehrstufige Filteranlage unmittelbar nachgeschaltet ist. Die Filteranlage besteht aus einem ersten heißen Filter (Keramikfilter, Zyklon), der bei ca. 800 °C betrieben wird und einem nachgeschalteten zweiten Filter (Textilfilter), der bei ca. 200 °C betrieben wird, wobei zwischen beiden Filtern eine Kühlvorrichtung angeordnet ist.

Der Abluftausgang der Filteranlage ist an eine übliche Nachbrennkammer angeschlossen, die bei Bedarf mit einer Rauchgasreinigungsanlage verbunden werden kann. Um eine effektive Nachverbrennung zu erreichen, wird die Abluft aus der Filteranlage vorgewärmt und der Nachbrennkammer zugeführt.

## Patentansprüche

1. Verfahren zur Rückgewinnung von Rohstoffen aus Abfällen und Reststoffen, insbesondere zur Rückgewinnung von Schwermetallen, indem zunächst eine flüssige oder pastöse Eingangsmischung und/oder eine Eingangsmischung aus zerkleinerten oder gemahlenen Bestandteilen hergestellt wird, wobei die Rückgewinnung der Rohstoffe aus der Eingangsmischung durch eine chemisch-thermische Behandlung erfolgt und die Abgase aus dem Ofen durch eine mehrstufige Filteranlage geleitet werden, wobei der jeweils erste Filter als heißer Filter ausgebildet ist und die Abgase anschließend gekühlt und nach Durchströmen wenigstens eines zweiten Filters nach einer Vorerwärmung bei hoher Temperatur verbrannt werden, **dadurch gekennzeichnet,**
- **daß** die flüssige, pastöse und/oder feste Eingangsmischung in Abhängigkeit von deren Zusammensetzung zunächst mit Zuschlagstoffen vermischt wird
- **daß** die Eingangsmischung gemeinsam mit einem Oxidations- oder Reduktionsmittel in den Ofen eingeblasen wird,
- **daß** die Eingangsmischung anschließend der chemisch/thermischen Behandlung in dem Ofen unterzogen wird, indem die eingeblasene Eingangsmischung bei einer vorgegebenen Temperatur von der Ofenatmosphäre mit einer vorgegebenen Strömungsgeschwindigkeit durchströmt wird,
- wodurch sich in Abhängigkeit von der Luftzusammensetzung und Temperatur schwermetallhaltige Schuppen niedriger Dichte bilden, die durch die im Ofen eingestellte Strömungsgeschwindigkeit der Luft durch die Filteranlage geleitet werden.

2. Verfahren nach Anspruch 1, **dadurch gekennzeichnet, daß** die thermische Behandlung in einer reduzierenden/oxidierenden Atmosphäre erfolgt.

3. Verfahren nach Anspruch 1 und 2, **dadurch gekennzeichnet, daß** als Reduktionsmittel gemahlene Kunststoffe oder Kunststoffgranulat zugesetzt wird.

4. Verfahren nach Anspruch 1, 2 und 3, **dadurch gekennzeichnet, daß** die thermische Behandlung bei einer Temperatur zwischen 350 °C und über 700 °C in Abhängigkeit von der jeweiligen Eingangsmischung durchgeführt wird.

5. Verfahren nach Anspruch 1, **dadurch gekennzeichnet, daß** die Temperatur der Filteranlage zwischen 200 °C und 800 °C liegt.

6. Verfahren nach den Ansprüchen 1 bis 5, **dadurch gekennzeichnet, daß** das entstehende Rauchgas, welches CO₂, SO₂, CL₂ usw. enthalten kann, nach der Filterung in einer Rauchgasreinigungsanlage zur Rückgewinnung von Salzsäure und Schwefelsäure weiterbehandelt wird.

7. Verfahren nach den Ansprüchen 1 bis 6, **dadurch gekennzeichnet, daß** die Bildung von Chrom-III-Oxid in chlorfreien Systemen über die Zersetzung der chromhaltigen Stoffe und die Reduktion/Oxidation des Chromes erfolgt.

8. Verfahren nach den Ansprüchen 1 bis 6, **dadurch gekennzeichnet, daß** die Bildung von Chrom-III-Oxid bei chlorhaltigen Systemen über die Zersetzung der chrom- und clorhaltigen Stoffe, die Bildung von Chromylchlorid (CrO₂CL₂), die Zersetzung von Chromvlchlorid und die Bildung von Chrom-III-Oxid erfolgt.

9. Verfahren nach einem der Ansprüche 1 bis 8, **dadurch gekennzeichnet, daß** die Rückgewinnung von Chrom als Chrom-III-Oxid aus Abfällen mit einer komplizierten Zusammensetzung durch Extraktion mit Chlor erfolgt, indem als Zwischenstoff Chromylchlorid gebildet wird.

10. Vorrichtung zur Durchführung des Verfahrens nach den Ansprüchen 1 bis 9, mit einem thermischen Reaktor zur chemisch-thermischen Behandlung der Rohstoffe, dem eine mehrstufige Filteranlage unmittelbar nachgeschaltet ist, wobei eine Nachbrennkammer in Strömungsrichtung der Abgase gesehen hinter der Filteranlage angeschlossen ist, bzw. nach der Staubabscheidung angeordnet ist, **dadurch gekennzeichnet, daß** der thermische Reaktor ein Drehrohr- oder Wirbelschichtofen ist, daß die Vorrichtung Mittel zur Einstellung der Ofentemperatur zwischen 350 °C und 1250 °C, in Abhängigkeit von der Mineralisierungstemperatur der herzustellenden Endprodukte Mittel zur Einstellung der Temperatur des ersten Filters der mehrstufigen Filteranlage bei ca. 800 °C und Mittel zur Einstellung der Temperatur des zweiten Filters bei ca. 200 °C auf weist.

11. Vorrichtung nach Anspruch 10, **dadurch gekennzeichnet, daß** dem ersten Filter eine Kühleinrichtung nachgeschaltet ist.

12. Vorrichtung nach Anspruch 10 und 11, **dadurch gekennzeichnet, daß** der zweite Filter als Textilfilter ausgebildet ist.

13. Vorrichtung nach den Ansprüchen 10 bis 12, **dadurch gekennzeichnet, daß** zwischen der Filteranlage und der Nachbrennkammer eine Heizeinrichtung zur Vorwärmung der Abgase angeordnet ist.

## Claims

1. Process for recovering raw materials from wastes and residues, in particular for recovering heavy metals, in which a liquid or paste-like feed mixture and/or a feed mixture comprising crushed or milled constituents is produced first, whereby the recovering of the raw materials from the feed mixture takes place as a result of a chemical-thermal treatment and the waste gases from the furnace are flowing through a multistage filter unit, whereby the first filter in each case is configured as a hot filter, and the waste gases are subsequently cooled and flow through at least one second filter, are preheated and are then burnt at a high temperature, **characterized in that** the liquid, paste-like and/or solid feed mixture, depending upon its composition, is then mixed together with additives; that the feed mixture is subjected into the furnace together with an oxidation- or reduction agent; that the feed mixture then undergoes a chemical/thermal treatment in the furnace, **in that** the subjected feed mixture is forced through the furnace atmosphere at a predetermined temperature with a predetermined velocity of flow; that as a result, depending upon the air composition and temperature, low-density scales containing heavy metals are formed, which are then flows through the filter unit by the air flow velocity set in the furnace.

2. Process according to Claim 1, **characterized in that** the thermal treatment is carried out in a reducing/oxidizing atmosphere.

3. Process according to Claim 1 and 2, **characterized in that** milled plastics or granulated plastic are/is added as reducing agent.

4. Process according to Claim 1, 2 and 3, **characterized in that** the thermal treatment is carried out at a temperature in the range from 350 °C to above 700 °C depending on the respective feed mixture.

5. Process according to Claim 1, **characterized in that** the temperature of the filter unit is in the range from 200 °C to 800 °C.

6. Process according to Claims 1 to 5, **characterized in that** the flue gas formed, which can contain CO₂, SO₂, CL₂, etc., is, after filtration, treated further in a flue gas purification plant to recover hydrochloric acid and sulphuric acid.

7. Process according to Claims 1 to 6, **characterized in that** the formation of chromium(III)-oxide in chlorine-free systems occurs via decomposition of the chromium-containing materials and reduction/oxidation of the chromium.

8. Process according to Claims 1 to 6, **characterized in that** the formation of chromium(III)-oxide in chlorine-containing systems occurs via decomposition of the chromium- and chlorine-containing materials, formation of chromyl chloride (CrO₂CL₂), decomposition of chromyl chloride and formation of chromium(III)-oxide.

9. Process according to any of Claims 1 to 8, **characterized in that** the recovery of chromium as chromium(III)-oxide from wastes having a complicated composition is carried out by extraction with chlorine, with chromyl chloride being formed as intermediate.

10. Device for carrying out the process according to Claims 1 to 9, a thermal reactor is provided for chemical-thermal treatment of the raw materials and in that a filter unit is connected immediately downstream of the reactor and an afterburning chamber is connected downstream of the filter unit in the flow direction of the waste gases or is arranged downstream of dust separation, **characterized in that** the thermal reactor is a rotary tube furnace or a fluidized-bed furnace, that the device is equipped with means for setting the furnace temperature in the range from 350 °C to 1250 °C depending upon the mineralization temperature of the end products to be produced, means for setting the temperature of the first filter of the multi-stage filter unit by approximately 800 °C and means for setting the temperature of the second filter by approximately 200 °C.

11. Device according to Claim 10, **characterized in that** a cooling device is positioned after the first filter.

12. Device according to Claims 10 and 11, **characterized in that** the second filter is **characterized** as a textile filter.

13. Device according to Claims 10 to 12, **characterized in that** a heating unit for preheating the waste gases is arranged between the filter unit and the afterburning chamber.

## Revendications

1. Procédé de récupérer des matières premières contenues dans des déchets et des résidus principalement pour la récupération des métaux lourds **caractérisé en ce que** tout d'abord un mélange de base fluide ou pâteux et / ou un mélange de base dont les composants ont été broyés ou pulvérisés est préparé de telle sorte que la récupération des matières premières depuis le mélange de base se fait par un traitement chimio-thermique et que les gaz d'échappement émis dans le four traversent un filtre à plusieurs étages dont le premier est un filtre chaud et que après avoir traversé celui-ci et refroidis, traversent au moins un deuxième filtre et après être de nouveau réchauffés ils sont alors brûlés à très haute température, **caractérisé en ce que :**
- selon sa composition, des additifs sont ajoutés au préalable au mélange de base fluide, pâteux et/ou solide,
- le mélange de base est insufflé dans le four avec un oxydant ou un réducteur,
- le mélange de base est ensuite soumis au traitement chimio-thermique dans le four en y faisant insuffler l'air du four à une température et une vitesse d'écoulement prédéfinies,
- de telle sorte que selon la composition de l'air et la température, des particules de plus faible densité contenant des métaux lourds se forment qui sont dirigés vers le filtre et passent à travers celui-ci grâce à la vitesse d'écoulement de l'air du four.

2. Procédé selon la revendication 1, **caractérisé en ce que** le traitement thermique a lieu dans une atmosphère réduisante/oxydante.

3. Procédé selon les revendications 1 et 2 **caractérisé en ce qu'**un réducteur constitué de matières synthétiques pulvérisées ou d'un granulat synthétique est ajouté.

4. Procédé selon les revendications 1, 2 et 3 **caractérisé en ce qu'**en fonction du mélange de base, le traitement thermique doit être effectué à une température comprise entre 350 °C et plus de 700 °C.

5. Procédé selon la revendication 1 **caractérisé en ce que** la température du dispositif de filtres est comprise entre 200 °C et 800 °C.

6. Procédé selon les revendications 1 à 5 **caractérisé en ce que** le gaz de combustion produit pouvant contenir du CO₂, du SO₂, du CL₂, etc. est traité dans une station d'épuration des gaz de combustion de manière à en extraire l'acide chlorhydrique et l'acide sulfurique. Il est ensuite soumis à d'autres traitements.

7. Procédé selon les revendications 1 à 6 **caractérisé en ce que** l'oxyde chromique III est obtenu dans des systèmes exempts de chlore grâce à la décomposition des matières chromées et à la réduction/l'oxydation du chrome.

8. Procédé selon les revendications 1 à 6 **caractérisé en ce que,** dans des systèmes chlorés, l'oxyde chromique III est obtenu grâce à la décomposition des matières chromées et chlorées, à la formation et à la décomposition de chloride de chromyle (CrO₂CL₂) ainsi qu'à la formation d'oxyde chromique III.

9. Procédé selon une des revendications 1 à 8 **caractérisé en ce que** la récupération de chrome sous forme d'oxyde chromique III provenant de déchets dont la composition est compliquée est effectuée grâce à l'extraction par le chlore en formant du chloride de chromyle comme produit intermédiaire.

10. Dispositif permettant d'appliquer le procédé selon les revendications 1 à 9 au moyen d'un réacteur thermique destiné au traitement chimio-thermique des matières premières et à la sortie duquel un système de filtres à plusieurs étages est directement raccordé; une chambre de post-combustion se trouve, vu depuis la direction d'écoulement des gaz, soit à la sortie du dispositif de filtres soit à la sortie de l'unité de séparation des poussières, **caractérisé en ce que** le réacteur thermique est un four rotatif ou un four à combustible fluidisé, que l'appareil possède un dispositif de réglage de la température du four entre 350 °C et 1250 °C, selon la température de minéralisation des produits finis à fabriquer, un dispositif de réglage de la température du premier filtre du filtre à plusieurs étages jusqu'à env. 800 °C ainsi qu'un dispositif de réglage de la température du deuxième filtre jusqu'à env. 200 °C.

11. Dispositif selon la revendication 10 **caractérisé en cela qu'un** refroidisseur est raccordé à la sortie du premier filtre.

12. Dispositif selon les revendications 10 et 11 **caractérisé en ce que** le deuxième filtre est un filtre textile.

13. Dispositif selon les revendications 10 à 12 **caractérisé en ce que** une installation de chauffage destinée au préchauffage des gaz d'échappement est installé entre le dispositif de filtres et la chambre de combustion.
